(19) Europäisches Patentamt / European Patent Office / Office européen des brevets

(11) **EP 1 994 506 B1**

(12) **EUROPEAN PATENT SPECIFICATION**

(45) Date of publication and mention
of the grant of the patent:
**11.04.2018 Bulletin 2018/15**

(21) Application number: **07756731.1**

(22) Date of filing: **07.02.2007**

(51) Int Cl.:
***G06T 15/20*** *(2011.01)*

(86) International application number:
**PCT/US2007/061791**

(87) International publication number:
**WO 2007/106623 (20.09.2007 Gazette 2007/38)**

(54) **TEXTURE UNIT FOR MULTI PROCESSOR ENVIRONMENT**

TEXTUREINHEIT FÜR EINE MULTIPROZESSORUMGEBUNG

UNITÉ DE TEXTURE POUR ENVIRONNEMENT MULTIPROCESSEUR

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **13.03.2006 US 374458**

(43) Date of publication of application:
**26.11.2008 Bulletin 2008/48**

(73) Proprietor: **Sony Interactive Entertainment Inc.
Tokyo 108-8270 (JP)**

(72) Inventor: **STENSON, Richard B.
Foster City, CA 94404 (US)**

(74) Representative: **D Young & Co LLP
120 Holborn
London EC1N 2DY (GB)**

(56) References cited:
**WO-A-97/41534          US-A- 6 130 680
US-A1- 2005 024 378     US-B1- 6 924 814**

- COX M ET AL: "Multi-level texture caching for 3D graphics hardware" COMPUTER ARCHITECTURE, 1998. PROCEEDINGS. THE 25TH ANNUAL INTERNATIONAL SYMPOSIUM ON BARCELONA, SPAIN 27 JUNE-1 JULY 1998, LOS ALAMITOS, CA, USA,IEEE COMPUT. SOC, US, 27 June 1998 (1998-06-27), pages 86-97, XP010291370 ISBN: 0-8186-8491-7
- VARTANIAN A ET AL: "The best distribution for a parallel OpenGL 3D engine with texture caches" HIGH-PERFORMANCE COMPUTER ARCHITECTURE, 2000. HPCA-6. PROCEEDINGS. SIXTH INTERNATIONAL SYMPOSIUM ON TOULUSE, FRANCE 8-12 JAN. 2000, LOS ALAMITOS, CA, USA,IEEE COMPUT. SOC, US, 8 January 2000 (2000-01-08), pages 399-408, XP010371911 ISBN: 0-7695-0550-3

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This invention relates to texture units for multi processor environments. Embodiments of the present invention are directed to computer graphics and more particularly to processing of textures on a parallel processor.

Three dimensional (3D) computer graphics often use a technique known as rasterization or to convert a two-dimensional image described in a vector format into pixels or dots for output on a video display or printer. Each pixel may be characterized by a location, e.g., in terms of vertical and horizontal coordinates, and a value corresponding to intensities of different colors that make up the pixel. Vector graphics represent an image through the use of geometric objects such as curves and polygons. On simple 3D rendering engines, object surfaces are normally transformed into triangle meshes, and then the triangles rasterised in order of depth in the 3D scene.

Scan-line algorithms are commonly used to rasterize polygons. A scan-line algorithm overlays a grid of evenly spaced horizontal lines over the polygon. On each line, where there are successive pairs of polygon intersections, a horizontal run of pixels is drawn to the output device. These runs collectively cover the entire area of the polygon with pixels on the output device.

In certain graphics applications bitmapped textures are "painted" onto the polygon. In such a case each pixel value drawn by the output device is determined from one or more pixels sampled from the texture. As used herein, a bitmap generally refers to a data file or structure representing a generally rectangular grid of pixels, or points of color, on a computer monitor, paper, or other display device. The color of each pixel is individually defined. For example, a colored pixel may be defined by three bytes-one byte each for red, green and blue. A bitmap typically corresponds bit for bit with an image displayed on a screen, probably in the same format as it would be stored in the display's video memory or maybe as a device independent bitmap. A bitmap is characterized by the width and height of the image in pixels and the number of bits per pixel, which determines the number of colors it can represent.

The process of transferring a texture bitmap to a surface often involves the use of texture MIP maps (also known as mipmaps). Such mipmaps are pre-calculated, optimized collections of bitmap images that accompany a main texture, intended to increase rendering speed and reduce artifacts. They are widely used in 3D computer games, flight simulators and other 3D imaging systems. The technique is known as mipmapping. The letters "MIP" in the name are an acronym of the Latin phrase *multum in parvo*, meaning "much in a small space".

Each bitmap image of the mipmap set is a version of the main texture, but at a certain reduced level of detail. Although the main texture would still be used when the view is sufficient to render it in full detail, the graphics device rendering the final image (often referred to as a renderer) will switch to a suitable mipmap image (or in fact, interpolate between the two nearest) when the texture is viewed from a distance, or at a small size. Rendering speed increases since the number of texture pixels ("texels") being processed can be much lower than with simple textures. Artifacts may be reduced since the mipmap images are effectively already anti-aliased, taking some of the burden off the real-time renderer.

If the texture has a basic size of 256 by 256 pixels (textures are typically square and must have side lengths equal to a power of 2), then the associated mipmap set may contain a series of 8 images, each half the size of the previous one: 128×128 pixels, 64×64, 32×32, 16×16, 8×8, 4×4, 2×2, 1×1 (a single pixel). If, for example, a scene is rendering this texture in a space of 40×40 pixels, then an interpolation of the 64×64 and the 32×32 mipmaps would be used. The simplest way to generate these textures is by successive averaging, however more sophisticated algorithms (perhaps based on signal processing and Fourier transforms) can also be used. The increase in storage space required to store all of these mipmaps for a texture is a third, because the sum of the areas 1/4 + 1/16 + 1/256 + ... converges to 1/3. (This assumes compression is not being used.)

The blending between mipmap levels typically involves some form of texture filtering. As used herein, texture filtering refers to a method used to map texels (pixels of a texture) to points on a 3D object. A simple texture filtering algorithm may take a point on an object and look up the closest texel to that position. The resulting point then gets its color from that one texel. This simple technique is sometimes referred to as *nearest neighbor* filtering. More sophisticated techniques combine more than one texel per point. The most often used algorithms in practice are bilinear filtering and trilinear filtering using mipmaps. Anisotropic filtering and higher-degree methods, such as quadratic or cubic filtering, result in even higher quality images.

Texture filtering operations for electronic devices such as video games, computers and the like are typically performed using a specially designed hardware referred to as graphics processors or graphics cards. Graphics cards typically have a large memory capacity that facilitates the handling of large textures. Unfortunately, typical graphics processors have clock rates that are slower than other processors, such as cell processors. In addition, graphics processors typically implement graphics processing functions in hardware. It would be more advantageous to perform graphics processing functions on a faster processor that can be programmed with appropriate software.

Cell processors are used in applications such as vertex processing for graphics. The processed vertex data may then be passed on to a graphics card for pixel processing. Cell processors are a type of microprocessor that utilizes parallel processing. The basic configuration of a cell processor includes a "Power Processor Element" ("PPE") (sometimes called "Processing Element", or "PE"), and multiple "Synergistic Processing Elements" ("SPE"). The PPEs and SPEs are linked together by an internal high speed bus dubbed "Element Interconnect Bus" ("EIB"). Cell processors are designed to be scalable for use in applications ranging from the hand held devices to main frame computers.

A typical cell processor has one PPE and up to 8 SPE. Each SPE is typically a single chip or part of a single chip containing a main processor and a co-processor. All of the SPEs and the PPE can access a main memory, e.g., through a memory flow controller (MFC). The SPEs can perform parallel processing of operations in conjunction with a program running on the main processor. The SPEs have small local memories (typically about 256 kilobytes) that must be managed by software-code and data must be manually transferred to/from the local SPE memories.

Direct memory access (DMA) transfers of data into and out of the SPE local store are quite fast. A cell processor chip with SPUs may run at about 3 gigahertz. A graphics card, by contrast, may run at about 500 MHz, which is six times slower. However, a cell processor SPE usually has a limited amount of memory space (typically about 256 kilobytes) available for texture maps in its local store. Unfortunately, texture maps can be very large. For example, a texture covering 1900 pixels by 1024 pixels would require significantly more memory than is available in an SPE local store. Furthermore, DMA transfers of data into and out of the SPE can have a high latency.

Prior art systems include those disclosed in US 6 924 814, WO 97/41 534, US 6 130 680 and US2005/0024378.

Thus, there is a need in the art, for a method for performing texture mapping of pixel data that overcomes the above disadvantages.

Various respective aspects and features of the invention are defined in the appended claims.

To overcome the above disadvantages, embodiments of the invention are directed to methods and apparatus for performing texture mapping of pixel data. A block of texture fetches is received with a co-processor element having a local memory. Each texture fetch includes pixel coordinates for a pixel in an image. The co-processor element determines one or more corresponding blocks of a texture stored in the main memory from the pixel coordinates of each texture fetch and a number of blocks NB that make up the texture. Each texture block contains all mipmap levels of the texture and N is chosen such that a number N of the blocks can be cached in a local store of the co-processor element, where N is less than NB. One or more of the corresponding blocks of the texture are loaded to the local memory if they are not currently loaded in the local memory. The co-processor element performs texture filtering with one or more of the texture blocks in the local memory to generate a pixel value corresponding to one of the texture fetches.

Embodiments of the invention will now be described, by way of example only, with reference to the accompanying drawings in which:

FIG. 1 is a schematic diagram illustrating texture unit fetching apparatus according to an embodiment of the present invention.

FIG. 2 is a flow diagram illustrating a texture unit fetching method according to an embodiment of the present invention.

FIG, 3 is a schematic diagram illustrating an example of determination of a texture block from a given set of image pixel coordinates.

FIG. 4 is a schematic diagram of a cell broadband engine architecture implementing texture fetching according to an embodiment of the present invention.

FIG. 5 is a schematic diagram of a cell processor-based system according to an embodiment of the present invention.

FIG. 6 is a block diagram illustrating caching of texture data in an SPE local store according to an embodiment of the present invention.

Although the following detailed description contains many specific details for the purposes of illustration, anyone of ordinary skill in the art will appreciate that many variations and alterations to the following details are within the scope of the invention. Accordingly, the exemplary embodiments of the invention described below are set forth without any loss of generality to, and without imposing limitations upon, the claimed invention.

Embodiments of the present invention allow parallel processors, such as cell processors to produce graphics without the use of specialized graphics hardware. According to an embodiment of the present invention, a texture unit fetches and blends image pixels from various levels of detail of a texture called mipmaps and returns the resultant value for a target pixel in an image. The texture unit is an approach to retrieving filtered texture data that may be implemented entirely in software. The texture unit utilizes no specialized hardware for this task. Instead, the texture unit may rely on standard parallel processor (e.g., cell processor) hardware and specialized software. Prior art graphics cards, which have specialized hardware for this task generally run at a much slower clock rate than a cell processor chip. A cell processor chip with a power processor element (PPE) and multiple synergistic processor elements (SPEs) may run at about 3 gigahertz. A graphics card, by contrast, may run at about 500 MHz, which is six times slower. Certain embodiments of the present invention take advantage of an SPE's independent DMA manager and, in software, try to achieve the performance of a hardware unit, and do this with the limited SPU local store that is typically available.

Embodiments of the present invention allow for texture unit operations to be done in software on single or multiple co-processor units (e.g., SPUs in a cell processor) having limited local memory and no cache. Therefore, paging of texture data can be handled by software as opposed to hardware. Achieving these types of operations requires achieving random memory access using a processor with a very small local store and no cache for hardware paging textures in and out of main memory. In embodiments of the present invention memory management steps may be managed by software where dedicated hardware has traditionally been used to solve this problem.

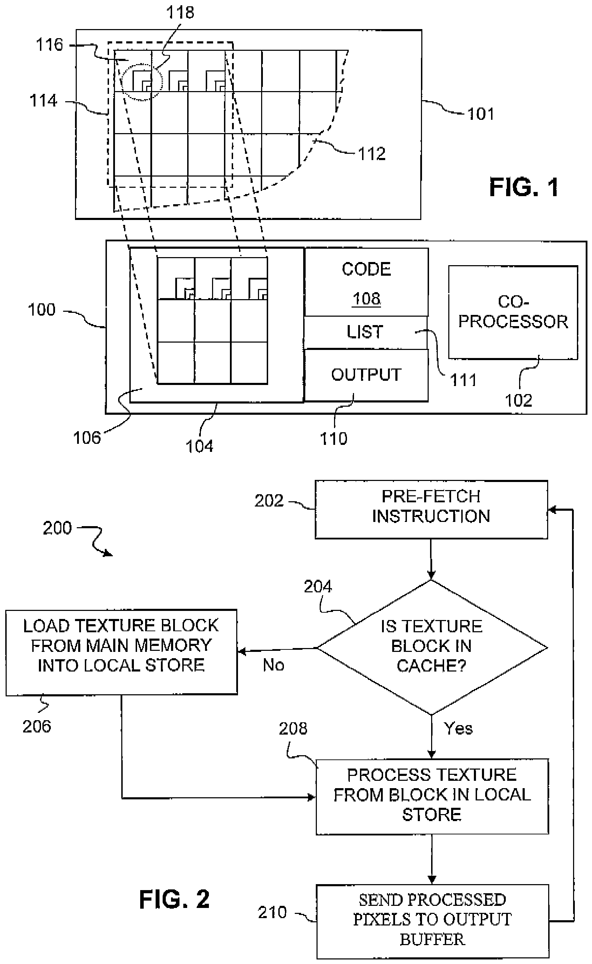

Embodiments of the invention may be understood by referring simultaneously to FIG. 1 and FIG. 2. As shown in FIG. 1, a texture unit **100** may include a co-processor **102** and a local memory **104.** The memory may include a texture block section **106** as well as space for code **108** and output results **110.** By way of example and without limitation, the texture unit **100** may be one of the SPU of a multiprocessor environment, such as a cell processor. Alternatively, Several SPUs could be used to increase the productivity of texture unit operations per cycle. The core of the texture unit **100** is the texture block section **106**, which may be implemented as a software texture data cache. By way of example, the texture block section may be made of a number (e.g., 16) 16K blocks of the local memory **104.** Each block would represent a block of data **116** from a main texture **112** stored in a main memory **101.** The main texture **112** may be of any size, although it is preferred that the texture **112** be square, i.e., of equal height and width in terms of the number of pixels. The texture **112** may be scalable to any size as long as it is square.

The texture blocks **116** are used to determine pixel values for each pixel in the image. In addition, all mipmap levels **118** may be embedded in each texture block **116** to limit the paging for any texture level to one at a time. Each pixel value may be structured as shown in Table I below.

TABLE I

| Number of bytes | 4 | 4 | 4 | 4 |
|---|---|---|---|---|
| data | Red Intensity | Green Intensity | Blue Intensity | A (Alpha or transparency value. Also called Opacity) |

FIG. 2 illustrates a flow diagram for a method **200** that may be implemented by the code **108** and executed by the co-processor **102.** At **202** graphics processing instructions are pre-fetched, e.g., from the main memory **101** or an associated cache. The instructions direct the co-processor **102** to perform operations on pixel data involving the main texture **112.** The pre-fetched instructions include information about which block of the main texture **112** are to be operated upon. The texture information for an instruction is referred to herein as a texture fetch. Each texture fetch may contain u and v coordinates corresponding to a location on an image. Typically u and v are floating point numbers between 0 and 1. By way of example, each fetch may be 16 bytes structured as shown in Table II below.

TABLE II

| Number of bytes | 4 | 4 | 4 | 4 |
|---|---|---|---|---|
| Data | u coordinate | v coordinate | Mipmap level | Unused - (This might be left unused, but kept for alignment purposes) |

Multiple fetch structures may be loaded into the local memory **104** at a time. For example 1024 fetch 16 byte structures may be loaded at a time for a total of 16Kbytes.

At **204** a check is performed on one or more of the pre-fetched instructions to determine if one or more texture blocks **116** that are to be operated upon are already stored in the texture block section **106** of the local memory **104.** If the requisite texture blocks are not already in the local store **104** they are transferred from the main memory **101.** The local memory **104** may also include a list **111** that describes which texture blocks are currently loaded.

If the check performed at **204** reveals that a required block of main textured **112** isn't loaded in the texture block section **106** of the local memory **104** then, as indicated at **206**, that block may be loaded from the main memory **101** to the local memory **104.** The transferred texture blocks **116** may be transferred a stream of texture coordinates that are converted to hashed values that coincide with the texture block that should be loaded for that texture coordinate.

To facilitate transfer of texture blocks **116**, the main texture **112** may be separated in a pre-process step into one or more groups **114** of texture blocks to facilitate efficient transfers to and from the storage locations **106.** Each texture block **116** would contain all mipmap levels **118** for that part of the texture **112.** In preferred embodiments, the texture group **114** is a square array of texture blocks **116.**

From the u and v coordinates in the fetch structures and the number NB of blocks in the texture stored in main memory, a first set of hash equations can determine which texture block to fetch from main memory. By way of example, and without limitation, the main memory block coordinates (denoted MMU and MMV respectively) for the corresponding block may be determined as follows:

$$MMU = int((remainder\ (u))*sqrt(NB))$$

$$MMV = int((remainder\ (v))*sqrt(NB))$$

Here MMU and MMV refer to the row and column coordinates for the block containing the texture that is to be mapped to the pixel coordinates (u, v) on the image. The first set of hash equations multiplies each coordinate (u, v) of a pixel in the image by the square root of the number of blocks in the texture and returns an integer number corresponding to a main memory block coordinate. To determine MMU the u coordinate of the pixel location is multiplied by the square root of the number of blocks and the result is rounded to the nearest integer value. By way of example, the result may be rounded down to the nearest integer.

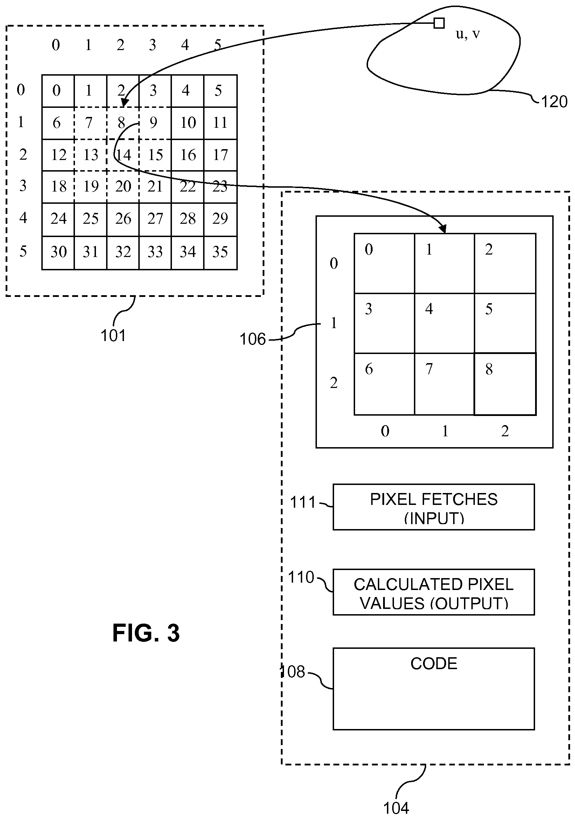

FIG. 3 illustrates an example of determination of the texture block 116 from a given set of image pixel coordinates. Consider an example in which a texture fetch calls a texture for a pixel location on an image **120** at coordinates u=0.4, v=0.3. For the purposes of this example, the main texture **112** in the main memory **101** may be a square texture divided into NB=36 blocks, i.e., 6 blocks on a side arranged in 6 rows (labeled rows 0, 1, 2, 3, 4, and 5 starting from the top) and six columns (labeled 0, 1, 2, 3, 4, and 5 starting from the left). The MMU coordinate for the corresponding texture block for this pixel location may be determined from 0.4*6 = 2.4, which rounds down to 2. Thus the corresponding texture block is in column 2 (the third column from the left). Similarly, the MMV coordinate for the corresponding texture block may be determined from 0.3*6 = 1.8, which rounds down to 1. Thus the corresponding texture block is in row 1 (the second row from the top). The MMU, MMV coordinates (2, 1) correspond to the texture block labeled 8.

A second hash equation may be used to determine where the 16 K texture block will go in the SPU cache. The block location corresponds to a square within a square array of N blocks. The second set of hash equations preferably retains the relative positions of blocks from the texture in main memory with respect to each other. The SPU memory block location may be determined as follows:

$$SPUMU = int((remainder(u)*sqrt(N))$$

$$SPUMV = int((remainder(v)*sqrt(N))$$

where N is the number of texture blocks to be cached in the local memory **104.** For example, if 9 blocks are cached, N= 9 and sqrt(N) = 3. SPUMU = 0.4*3 = 1.2, which rounds down to 1 and SPUMV = 0.3*3 = 0.9, which rounds down to zero. Thus, block 8 of the texture in main memory would be stored at the location corresponding to row 0, column 1 of the texture block location **106.** The texture blocks **116** may then be paged in as needed based on a hashed value of the required texture coordinate addresses. The list **111** keeps track of which blocks **116** are currently loaded to facilitate the check performed at **204.**

At **210,** the co-processor **102** processes pixels from a texture block 116 in the local memory **104.** By way of example, the co-processor **102** may perform the bi-linear filtering for the current mipmap level and a bi-linear filter of the next mipmap level and then do a linear interpolation of the two to get the final texture color value which will be returned in a stream of data as output. The output pixels may be stored in the output section **110** of the local memory **104** as indicated at **210.** The texture unit **100** may output multiple pixel values at a time, e.g., 1024 pixel values of 16 bytes each for a total of 16 Kbytes of output at one time.

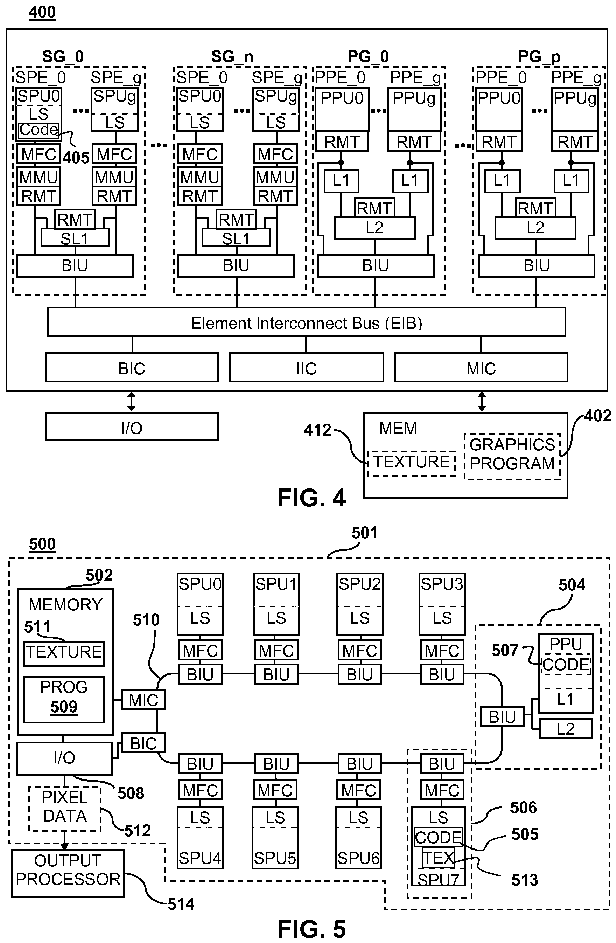

By way of example, and without limitation, FIG. 4 illustrates a type of cell processor **400** characterized by an architecture known as Cell Broadband engine architecture (CBEA) - compliant processor. A cell processor can include multiple groups of PPEs (PPE groups) and multiple groups of SPEs (SPE groups) as shown in this example. Alternatively, the cell processor may have only a single SPE group and a single PPE group with a single SPE and a single PPE. Hardware resources can be shared between units within a group. However, the SPEs and PPEs must appear to software as independent elements.

In the example depicted in FIG. 4, the cell processor **400** includes a number of groups of SPEs **SG-0...SG_n** and a number of groups of PPEs **PG_0...PG_p.** Each SPE group includes a number of SPEs **SPE0...SPEg.** The cell processor **400** also includes a main memory **MEM** and an input/output function **I/O.** The main memory **MEM** may include a graphics program **402** and one or more textures **412.** Instructions from the program may be executed by a PPE and SPEs. The program **402** may include instructions that implement the features described above, e.g., with respect to FIG. 2. Code **405** containing these instructions may be loaded into one or more of the SPE for execution as described above.

Each PPE group includes a number of PPEs **PPE_0...PPE_g SPE.** In this example a group of SPEs shares a single cache **SL1.** The cache **SL1** is a first-level cache for direct memory access (DMA) transfers between local storage and main storage. Each PPE in a group has its own first level (internal) cache **L1.** In addition the PPEs in a group share a single second-level (external) cache **L2.** While caches are shown for the SPE and PPE in FIG. 1, they are optional for cell processors in general and CBEA in particular.

An Element Interconnect Bus **EIB** connects the various components listed above. The SPEs of each SPE group and the PPEs of each PPE group can access the **EIB** through bus interface units **BIU.** The cell processor **400** also includes two controllers typically found in a processor: a Memory Interface Controller **MIC** that controls the flow of data between the EIB and the main memory **MEM,** and a Bus Interface Controller **BIC,** which controls the flow of data between the **I/O** and the **EIB.** Although the requirements for the **MIC**, **BIC**, **BIUs** and **EIB** may vary widely for different implementations, those of skill in the art will be familiar their functions and circuits for implementing them.

Each SPE is made includes an SPU (**SPU0...SPUg**). Each SPU in an SPE group has its own local storage area **LS** and a dedicated memory flow controller **MFC** that includes an associated memory management unit **MMU** that can hold and process memory-protection and access-permission information.

The PPEs may be 64-bit PowerPC Processor Units (PPUs) with associated caches. A CBEA-compliant system includes a vector multimedia extension unit in the PPE. The PPEs are general-purpose processing units, which can access system management resources (such as the memory-protection tables, for example). Hardware resources defined in the CBEA are mapped explicitly to the real address space as seen by the PPEs. Therefore, any PPE can address any of these resources directly by using an appropriate effective address value. A primary function of the PPEs is the management and allocation of tasks for the SPEs in a system.

The SPUs are less complex computational units than PPEs, in that they do not perform any system management functions. They generally have a single instruction, multiple data (SIMD) capability and typically process data and initiate any required data transfers (subject to access properties set up by a PPE) in order to perform their allocated tasks. The purpose of the SPU is to enable applications that require a higher computational unit density and can effectively use the provided instruction set. A significant number of SPUs in a system, managed by the PPEs, allow for cost-effective processing over a wide range of applications. The SPUs implement a new instruction set architecture.

MFC components are essentially the data transfer engines. The MFC provides the primary method for data transfer, protection, and synchronization between main storage of the cell processor and the local storage of an SPE. An MFC command describes the transfer to be performed. A principal architectural objective of the MFC is to perform these data transfer operations in as fast and as fair a manner as possible, thereby maximizing the overall throughput of a cell processor. Commands for transferring data are referred to as MFC DMA commands. These commands are converted into DMA transfers between the local storage domain and main storage domain.

Each MFC can typically support multiple DMA transfers at the same time and can maintain and process multiple MFC commands. In order to accomplish this, the MFC maintains and processes queues of MFC commands. The MFC can queue multiple transfer requests and issues them concurrently. Each MFC provides one queue for the associated SPU (MFC SPU command queue) and one queue for other processors and devices (MFC proxy command queue). Logically, a set of MFC queues is always associated with each SPU in a cell processor, but some implementations of the architecture can share a single physical MFC between multiple SPUs, such as an SPU group. In such cases, all the MFC facilities must appear to software as independent for each SPU. Each MFC DMA data transfer command request involves both a local storage address (LSA) and an effective address (EA). The local storage address can directly address only the local storage area of its associated SPU. The effective address has a more general application, in that it can reference main storage, including all the SPE local storage areas, if they are aliased into the real address space (that is, if MFC_SR1[D] is set to '1').

An MFC presents two types of interfaces: one to the SPUs and another to all other processors and devices in a processing group. The SPUs use a channel interface to control the MFC. In this case, code running on an SPU can only access the MFC SPU command queue for that SPU. Other processors and devices control the MFC by using memory-mapped registers. It is possible for any processor and device in the system to control an MFC and to issue MFC proxy command requests on behalf of the SPU. The MFC also supports bandwidth reservation and data synchronization features. To facilitate communication between the SPUs and/or between the SPUs and the PPU, the SPEs and PPEs may include signal notification registers that are tied to signaling events. The PPEs and SPEs may be coupled by a star topology in which the PPE acts as a router to transmit messages to the SPEs. Such a topology may not provide for direct communication between SPEs. In such a case each SPE and each PPE may have a one-way signal notification register referred to as a mailbox. The mailbox can be used for SPE to host OS synchronization.

The **IIC** component manages the priority of the interrupts presented to the PPEs. The main purpose of the **IIC** is to allow interrupts from the other components in the processor to be handled without using the main system interrupt controller. The **IIC** is really a second level controller. It is intended to handle all interrupts internal to a CBEA-compliant processor or within a multiprocessor system of CBEA-compliant processors. The system interrupt controller will typically handle all interrupts external to the cell processor.

In a cell processor system, software often must first check the **IIC** to determine if the interrupt was sourced from an external system interrupt controller. The **IIC** is not intended to replace the main system interrupt controller for handling interrupts from all I/O devices.

There are two types of storage domains within the cell processor: local storage domain and main storage domain. The local storage of the SPEs exists in the local storage domain. All other facilities and memory are in the main storage domain. Local storage consists of one or more separate areas of memory storage, each one associated with a specific SPU. Each SPU can only execute instructions (including data load and data store operations) from within its own associated local storage domain. Therefore, any required data transfers to, or from, storage elsewhere in a system must always be performed by issuing an MFC DMA command to transfer data between the local storage domain (of the individual SPU) and the main storage domain, unless local storage aliasing is enabled.

An SPU program references its local storage domain using a local address. However, privileged software can allow the local storage domain of the SPU to be aliased into main storage domain by setting the D bit of the MFC_SR1 to '1'. Each local storage area is assigned a real address within the main storage domain. (A real address is either the address of a byte in the system memory, or a byte on an I/O device.) This allows privileged software to map a local storage area into the effective address space of an application to allow DMA transfers between the local storage of one SPU and the local storage of another SPU.

Other processors or devices with access to the main storage domain can directly access the local storage area, which has been aliased into the main storage domain using the effective address or I/O bus address that has been mapped through a translation method to the real address space represented by the main storage domain.

Data transfers that use the local storage area aliased in the main storage domain should do so as caching inhibited, since these accesses are not coherent with the SPU local storage accesses (that is, SPU load, store, instruction fetch) in its local storage domain. Aliasing the local storage areas into the real address space of the main storage domain allows any other processors or devices, which have access to the main storage area, direct access to local storage. However, since aliased local storage must be treated as non-cacheable, transferring a large amount of data using the PPE load and store instructions can result in poor performance. Data transfers between the local storage domain and the main storage domain should use the MFC DMA commands to avoid stalls.

The addressing of main storage in the CBEA is compatible with the addressing defined in the PowerPC Architecture. The CBEA builds upon the concepts of the PowerPC Architecture and extends them to addressing of main storage by the MFCs.

An application program executing on an SPU or in any other processor or device uses an effective address to access the main memory. The effective address is computed when the PPE performs a load, store, branch, or cache instruction, and when it fetches the next sequential instruction. An SPU program must provide the effective address as a parameter in an MFC command. The effective address is translated to a real address according to the procedures described in the overview of address translation in PowerPC Architecture, Book III. The real address is the location in main storage which is referenced by the translated effective address. Main storage is shared by all PPEs, MFCs, and I/O devices in a system. All information held in this level of storage is visible to all processors and to all devices in the system. This storage area can either be uniform in structure, or can be part of a hierarchical cache structure. Programs reference this level of storage using an effective address.

The main memory of a system typically includes both general-purpose and nonvolatile storage, as well as special-purpose hardware registers or arrays used for functions such as system configuration, data-transfer synchronization, memory-mapped I/O, and I/O subsystems. There are a number of different possible configurations for the main memory, By way of example and without limitation, Table I lists the sizes of address spaces in main memory for a particular cell processor implementation known as Cell Broadband Engine Architecture (CBEA).

TABLE I

| Address Space | Size | Description |
|---|---|---|
| Real Address Space | $2^m$ bytes | where $m \leq 62$ |
| Effective Address Space | $2^{64}$ bytes | An effective address is translated to a virtual address using the segment lookaside buffer (SLB). |
| Virtual Address Space | 2" bytes | where $65 \leq 80$<br>A virtual address is translated to a real address using the page table. |

(continued)

| Address Space | Size | Description |
|---|---|---|
| Real Page | $2^{12}$ bytes | |
| Virtual Page | $2^p$ bytes | where $12 \leq p \leq 28$<br>Up to eight page sizes can be supported simultaneously. A small 4-KB (p = 12) page is always supported. The number of large pages and their sizes are implementation-dependent. |
| Segment | $2^{28}$ bytes | The number of virtual segments is 2(n - 28) where $65 \leq n \leq 80$ |
| Note: The values of "m," "n," and "p" are implementation-dependent. | | |

The cell processor 400 may include an optional facility for managing critical resources within the processor and system. The resources targeted for management under the cell processor are the translation lookaside buffers (TLBs) and data and instruction caches. Management of these resources is controlled by implementation-dependent tables.

Tables for managing TLBs and caches are referred to as replacement management tables RMT, which may be associated with each MMU. Although these tables are optional, it is often useful to provide a table for each critical resource, which can be a bottleneck in the system. An SPE group may also contain an optional cache hierarchy, the SL1 caches, which represent first level caches for DMA transfers. The SL1 caches may also contain an optional RMT.

FIG. 5 depicts an example of system 500 configured to texture unit operations according to an embodiment of the present invention. The cell processor 500 includes a main memory 502, a single PPE 504 and eight SPEs 506. However, the cell processor 501 may be configured with any number of SPE's. With respect to FIG. 5, the memory, PPE, and SPEs can communicate with each other and with an I/O device 508 over a ring-type element interconnect bus 510. The memory 502 contains one or more textures 511 which may be configured as described above. The memory 502 may also contain a program 509 having features in common with the program 402 described above. At least one of the SPEs 506 includes in its local store code 505 having that may include instructions for carrying out the method described above with respect to FIG. 2. The SPE 506 may also include a texture block 513 loaded from the main texture 511 in main memory 502. The PPE 504 may include in its L1 cache, code 507 (or portions thereof) with instructions for executing portions of the program 509. Codes 505, 507 may also be stored in memory 502 for access by the SPE and PPE when needed as described above. Output pixel data 512 generated by the SPE 506 as a result of running code 505 may be transferred via the I/O device 508 to an output processor 514 e.g., a screen driver, to render an image.

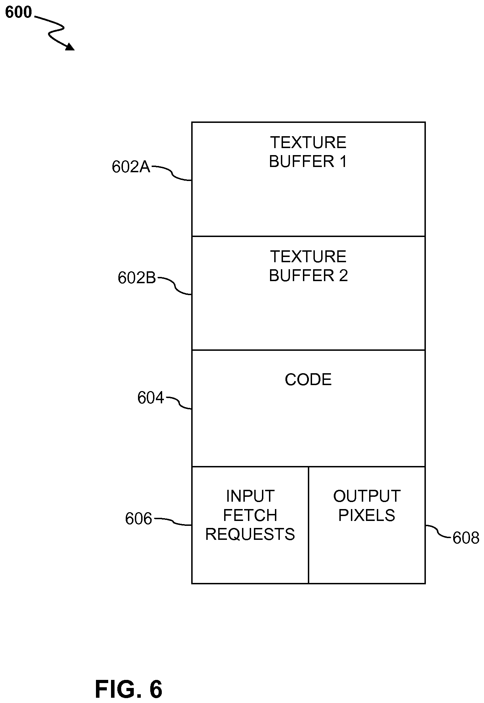

In a preferred embodiment, only two blocks are loaded at a time into SPE LS. As shown in FIG. 6 an SPE local store 600 may include two texture buffers 602A, 602B. Each texture buffer may have a maximum size of about one fourth of the total memory spaces available in the local store 600. Approximately one fourth of the memory space available in the local store 600 may be available for code 604 and the remaining fourth may be split between input texture fetch requests 606 and output pixel results 608. By way of example and without limitation, for a 256 kilobyte LS, 128 kilobytes may be set aside for texture cache buffers, 64 kilobytes may be set aside for code, 32 kilobytes may be set aside for storing input texture requests and 32 kilobytes may be set aside for storing output pixel results.

In this embodiment a hash table look up is only applied to texture blocks being loaded from main memory. However, as described above each texture is processed into blocks for paging in and out of the SPE local store memory 600. Each texture contains extra bordering columns and rows of bordering pixels to the left, right, top, and bottom and if on the edge of the texture the columns that wrap around to the opposite side of the textures so that bilinear filtering of each pixel lookup can be done without the need to load an additional block of the texture. Also as before, each mipmap level may be built this same way and included in this block. This allows for bi-linear filtering of pixels even if the fetched pixels are located on the edge of a fetched texture block.

Studies performed on how a texture unit in accordance with embodiments of the invention would work indicate that there is an 80-90% hit rate for texture fetch requests where the texture block that is needed is already in the cache and doesn't need to be transferred from main memory by DMA. Such a system may take advantage of this locality of fetches if the hash texture block look-up operation pre-fetches some number of fetches (e.g., about 100 fetches) ahead of actually processing the fetched data. If a new block needs to be loaded, it can be loaded into the second buffer while processing proceeds on the block stored in the first buffer. This way DMA time may be hidden as much as possible and the SPU will spend the vast majority of its time processing pixel data that is already in the cache.

The studies described above were performed using an operation accurate CELL simulator called MAMBO, a property of IBM. The code was compiled using Cell processor compilers. Thus, the same compiled code was used as if it were running on a CELL. Although MAMBO is a simulated environment not running at CELL speed it still is a good gauge of this algorithm behavior, e.g., Hit Rate. It is expected that embodiments of the invention implemented with the constraints described herein on an actual CELL processor would achieve Hit Rates consistent with those observed in the studies performed using the CELL simulator. The principal factor limiting the hit rate is not speed the speed at which the code is run but rather the locality of the texture fetches and cache allocations on the SPE. The randomness of the fetches and the effectiveness of the cache in avoiding loading of new blocks are the primary factors limiting the Hit Rate.

By way of example, the processing of the data in the cache may be bi-linear filtering of pixel data from one mipmap level or tri-linear filtering or blending of between bi-linear filtered pixels from each mipmap level. The blending between mipmap levels typically involves some form of texture filtering. Such texture filtering techniques are well-known to those of skill in the art and are commonly used in computer graphics, e.g., to map texels (pixels of a texture) to points on a 3D object.

Several SPUs performing Texture Unit operations could be comparable to dedicated graphics hardware for moderate performance. In testing, a range of 80-95% hit rate of texture already in cache was found minimizing the amount of loading of texture blocks from main memory. An entire software system built around this software texture unit could allow for any given TV, computer, or media center to have 3D rendering capabilities in software just be having a cell processor inside.

Embodiments of the present invention can be tremendously beneficial because the DMA bandwidth is minimized by the use of the specially created 64k texture blocks that contain border data and their mipmaps. Also the SPU fetch time may be minimized using a fast early hash sort of these texture blocks to hide DMA latency when new a new block needs to be loaded. This way, SPUs can spend their time blending pixels and packing the resultant pixels into the output buffers with very little time spent waiting on texture block DMA or having to worry about edge cases for bi-linear or tri-linear filtering.

Embodiments of the present invention allow for processor intensive rendering of highly detailed textured graphics in software on an SPU. Embodiments of the present invention avoid problems that would otherwise arise due to the large amount random memory access that texturing operations typically require. With embodiments of the present invention, texture unit operation may be done by SPUs on a cell processor very efficiently once the textures are processed into the blocks. Therefore even video game consoles, televisions, and telephones, containing a Cell processor could produce advanced texture graphics without the use of specialized graphics hardware, thus saving cost considerably and raising profits.

While the above includes a complete description of the preferred embodiment of the present invention, it is possible to use various alternatives, modifications and equivalents. Therefore, the scope of the present invention should be determined not with reference to the above description but should, instead, be determined with reference to the appended claims, along with their full scope of equivalents. Any feature described herein, whether preferred or not, may be combined with any other feature described herein, whether preferred or not. In the claims that follow, the indefinite article "A", or "An" refers to a quantity of one or more of the item following the article, except where expressly stated otherwise. The appended claims are not to be interpreted as including means-plus-function limitations, unless such a limitation is explicitly recited in a given claim using the phrase "means for."

**Claims**

1. A method for performing texture mapping of pixel data, the method comprising the steps of:

   a) a co-processor element (102) receiving a block of texture fetches, the co-processor element having a local memory (104), wherein each texture fetch includes pixel coordinates for a pixel in an image;
   b) the co-processor element determining one or more corresponding blocks of a texture stored in a main memory from the pixel coordinates of each texture fetch and a number of blocks NB that make up the texture, wherein the texture has been divided into the number NB of blocks, wherein each block contains all mipmap levels of the texture and wherein NB is chosen such that a number N of the blocks can be cached in the local memory of the co-processor element, wherein N is less than NB;
   c) loading to the local memory one or more of the corresponding blocks of the texture if the one or more blocks of texture are not currently loaded in the local memory; and
   d) using the co-processor element to perform texture filtering of one or more of the texture blocks in the local memory to generate a pixel value corresponding to one of the texture fetches,

   the method being **characterised in that**
   the texture provides one or more columns and/or rows of bordering pixels along an edge of the texture, wherein the bordering pixels wrap around to an opposite edge of the texture.

2. The method of claim 1 wherein the texture is a square texture.

3. The method of claim 1 wherein the local memory has a maximum storage size of about 256 kilobytes.

4. The method of claim 1 wherein step d) includes performing bilinear or trilinear filtering of two or more texture blocks to generate the pixel value.

5. The method of claim 1 wherein step b) includes performing calculations of the type:

    MMU = int((remainder (u))*sqrt(NB))
    MMV = int((remainder (v))*sqrt(NB))
    where MMU and MMV are coordinates within the texture stored in the main memory and u and v are the pixel coordinates.

6. The method of claim 1, further comprising, determining a local memory block location for each corresponding block of texture.

7. The method of claim 6 wherein determining the local memory block location for each corresponding block of texture includes performing calculations of the type:

    SPUMu = int((remainder (u))*sqrt(N))
    SPUMv = int((remainder (v))*sqrt(N))
    where SPUMu and SPUMv are coordinates of the local memory block location and u and v are the pixel coordinates.

8. The method of claim 1, further comprising the step of outputting the pixel value to a graphical display device.

9. The method of claim 1, further comprising, before c), determining whether the corresponding block of texture is currently loaded in the local memory.

10. The method of claim 1 wherein the number N of the blocks can be cached in the local memory is equal to two.

11. The method of claim 10 wherein c) and d) include loading a texture block into one location in the local memory while processing texture block data from another texture block stored in another location in the local memory.

12. A graphics processing apparatus, comprising
a processor unit having a main memory, a main processor element coupled to the main memory, and a co-processor element (102) having a local memory (104), the local memory containing co-processor executable software instructions for performing texture mapping of pixel data, the co-processor executable software instructions including:

    a) an instruction to cause the co-processor to receive a block of texture fetches, wherein each texture fetch includes pixel coordinates for a pixel in an image;
    b) an instruction to cause the co-processor to determine a corresponding block of a texture stored in the main memory from the pixel coordinates of each texture fetch and a number of blocks NB that make up the texture, wherein the texture has been divided into a number NB of blocks, wherein each block contains all mipmap levels of the texture and wherein NB is chosen such that a number N of the blocks can be cached in the local memory, wherein N is less than NB;
    c) an instruction to cause the loading to the local memory of one or more of the corresponding blocks of the texture if the one or more blocks of texture are not currently loaded in the local memory;
    d) an instruction to cause the co-processor to perform texture filtering with one or more of the texture blocks in the local memory to generate a pixel value corresponding to one of the texture fetches,

    the apparatus being **characterised in that**:

    the texture provides one or more columns and/or rows of bordering pixels along an edge of the texture, wherein the bordering pixels wrap around to an opposite edge of the texture.

13. The apparatus of claim 12 wherein the processing unit is a cell processor, wherein the main processor element is a power processor element and the co-processor element is a synergistic processor element.

14. Computer software for implementing a method according to any one of claims 1 to 11.

**Patentansprüche**

1. Verfahren zum Durchführen eines Texture Mapping von Pixeldaten, wobei das Verfahren die folgenden Schritte umfasst:

a) ein Coprozessorelement (102) empfängt einen Block von Texture Fetches, wobei das Coprozessorelement einen Lokalspeicher (104) besitzt, wobei jedes Texture Fetch Pixelkoordinaten für ein Pixel in einem Bild enthält;
b) das Coprozessorelement bestimmt einen oder mehrere entsprechende Blöcke einer in einem Hauptspeicher gespeicherten Textur anhand der Pixelkoordinaten jedes Texture Fetch und einer Anzahl von Blöcken NB, die die Textur bilden, wobei die Textur in die Anzahl NB von Blöcken unterteilt worden ist, wobei jeder Block alle Mipmap-Level der Textur enthält und wobei NB derart gewählt ist, dass eine Anzahl N der Blöcke in dem Lokalspeicher des Coprozessorelements zwischengespeichert werden kann, wobei N kleiner als NB ist;
c) Laden eines oder mehrerer der entsprechenden Blöcke der Textur in den Lokalspeicher, falls der eine oder die mehreren Blöcke der Textur nicht gegenwärtig in den Lokalspeicher geladen sind; und
d) Verwenden des Coprozessorelements zum Durchführen einer Textur-Filterung eines oder mehrerer der Texturblöcke in dem Lokalspeicher, um einen Pixelwert entsprechend einem der Texture Fetches zu generieren,

wobei das Verfahren **dadurch gekennzeichnet ist, dass**
die Textur eine oder mehrere Spalten und/oder Zeilen von angrenzenden Pixeln entlang eines Randes der Textur bereitstellt, wobei die angrenzenden Pixel herum zu einem gegenüberliegenden Rand der Textur gewickelt sind.

2. Verfahren nach Anspruch 1, wobei die Textur eine quadratische Textur ist.

3. Verfahren nach Anspruch 1, wobei der Lokalspeicher eine maximale Ablagegröße von etwa 256 Kilobyte besitzt.

4. Verfahren nach Anspruch 1, wobei Schritt d) das Durchführen einer bilinearen oder trilinearen Filterung von zwei oder mehr Texturblöcken beinhaltet, um den Pixelwert zu generieren.

5. Verfahren nach Anspruch 1, wobei Schritt b) das Durchführen von Berechnungen von dem Typ beinhaltet:

$$\text{MMU} = \text{int}((\text{rest }(u))*\text{sqrt}(NB))$$

$$\text{MMV} = \text{int}((\text{rest }(v))*\text{sqrt}(NB))$$

wobei MMU und MMV Koordinaten innerhalb der in dem Hauptspeicher gespeicherten Textur sind und u und v die Pixelkoordinaten sind.

6. Verfahren nach Anspruch 1, weiterhin umfassend das Bestimmen eines Lokalspeicher-Blockorts für jeden entsprechenden Block der Textur.

7. Verfahren nach Anspruch 6, wobei das Bestimmen des Lokalspeicher-Blockorts für jeden entsprechenden Texturblock das Durchführen von Berechnungen von dem Typ beinhaltet:

$$\text{SPUMu} = \text{int}((\text{rest }(u))*\text{sqrt}(N))$$

$$\text{SPUMv} = \text{int}((\text{rest }(v))*\text{sqrt}(N))$$

wobei SPUMu und SPUMv Koordinaten des Lokalspeicher-Blockorts sind und u und v die Pixelkoordinaten sind.

8. Verfahren nach Anspruch 1, weiterhin umfassend den Schritt des Ausgebens des Pixelwerts an eine Grafikdisplayeinrichtung.

9. Verfahren nach Anspruch 1, weiterhin umfassend vor c) das Bestimmen, ob der entsprechende Block der Textur gegenwärtig in den Lokalspeicher geladen ist.

10. Verfahren nach Anspruch 1, wobei die Anzahl N der Blöcke, die in dem Lokalspeicher zwischengespeichert werden kann, gleich zwei ist.

11. Verfahren nach Anspruch 10, wobei c) und d) das Laden eines Texturblocks in einen Ort in dem Lokalspeicher beinhalten, während Texturblockdaten von einem anderen, an einem anderen Ort in dem Lokalspeicher gespeicherten Texturblock verarbeitet werden.

12. Grafikverarbeitungsvorrichtung, die Folgendes umfasst:

eine Prozessoreinheit mit einem Hauptspeicher, ein an den Hauptspeicher gekoppeltes Hauptprozessorelement und ein Coprozessorelement (102) mit einem Lokalspeicher (104), wobei der Lokalspeicher von dem Coprozessor ausführbare Softwareanweisungen zum Durchführen eines Texture Mapping von Pixeldaten enthält, wobei die von dem Coprozessor ausführbaren Softwareanweisungen Folgendes beinhalten:

a) eine Anweisung, um zu bewirken, dass der Coprozessor einen Block von Texture Fetches empfängt, wobei jedes Texture Fetch Pixelkoordinaten für ein Pixel in einem Bild enthält;
b) eine Anweisung, um zu bewirken, dass der Coprozessor einen entsprechenden Block einer in dem Hauptspeicher gespeicherten Textur anhand der Pixelkoordinaten jedes Texture Fetch und einer Anzahl von Blöcken NB, die die Textur bilden, bestimmt, wobei die Textur in eine Anzahl NB von Blöcken unterteilt worden ist, wobei jeder Block alle Mipmap-Level der Textur enthält und wobei NB derart gewählt ist, dass eine Anzahl N der Blöcke in dem Lokalspeicher zwischengespeichert werden kann, wobei N kleiner als NB ist;
c) eine Anweisung, um das Laden von einem oder mehreren der entsprechenden Blöcke der Textur in den Lokalspeicher zu bewirken, falls der eine oder die mehreren Blöcke der Textur nicht gegenwärtig in den Lokalspeicher geladen sind;
d) eine Anweisung, um zu bewirken, dass der Coprozessor eine Textur-Filterung mit einem oder mehreren der Texturblöcke in dem Lokalspeicher durchführt, um einen Pixelwert entsprechend einem der Texture Fetches zu generieren,

wobei die Vorrichtung **dadurch gekennzeichnet ist, dass**:

die Textur eine oder mehrere Spalten und/oder Zeilen von angrenzenden Pixeln entlang eines Randes der Textur bereitstellt, wobei die angrenzenden Pixel herum zu einem gegenüberliegenden Rand der Textur gewickelt sind.

13. Vorrichtung nach Anspruch 12, wobei die Verarbeitungseinheit ein Zellenprozessor ist, wobei das Hauptprozessorelement ein Leistungsprozessorelement ist und das Coprozessorelement ein synergistisches Prozessorelement ist.

14. Computersoftware zum Implementieren eines Verfahrens nach einem der Ansprüche 1 bis 11.

**Revendications**

1. Procédé destiné à effectuer un plaquage de texture sur des données de pixels, le procédé comprenant les étapes de :

a) réception par un élément coprocesseur (102) d'un bloc de textures extraites, l'élément coprocesseur ayant une mémoire locale (104), chaque texture extraite comportant des coordonnées de pixel pour un pixel dans une image ;
b) détermination par l'élément coprocesseur d'un ou plusieurs blocs correspondants d'une texture stockée dans une mémoire principale à partir des coordonnées de pixel de chaque texture extraite et d'un nombre de blocs NB qui constituent la texture, la texture ayant été divisée en un nombre NB de blocs, chaque bloc contenant tous les niveaux de carte MIP de la texture et NB étant choisi de telle sorte qu'un nombre N des blocs peuvent être mis en cache dans la mémoire locale de l'élément coprocesseur, N étant inférieur à NB ;

c) chargement dans la mémoire locale d'un ou plusieurs des blocs correspondants de la texture si le ou les blocs de texture ne sont pas actuellement chargés dans la mémoire locale ; et

d) utilisation de l'élément coprocesseur pour effectuer un filtrage de texture sur un ou plusieurs des blocs de texture dans la mémoire locale pour générer une valeur de pixel correspondant à une des textures extraites,

le procédé étant **caractérisé en ce que** la texture fournit une ou plusieurs colonnes et/ou rangées de pixels de bordure le long d'un bord de la texture, les pixels de bordure s'enroulant jusqu'à un bord opposé de la texture.

2. Procédé de la revendication 1 dans lequel la texture est une texture carrée.

3. Procédé de la revendication 1 dans lequel la mémoire locale a une taille de stockage maximale d'environ 256 kilooctets.

4. Procédé de la revendication 1 dans lequel l'étape d) comporte l'opération consistant à effectuer un filtrage bilinéaire ou trilinéaire sur au moins deux blocs de texture pour générer la valeur de pixel.

5. Procédé de la revendication 1 dans lequel l'étape b) comporte l'opération consistant à effectuer des calculs du type :

$$\mathtt{MMU\ =\ int((reste(u))*}\sqrt{NB})$$

$$\mathtt{MMV\ =\ int((reste(v))*}\sqrt{NB})$$

où MMU et MMV sont des coordonnées à l'intérieur de la texture stockée dans la mémoire principale et u et v sont les coordonnées de pixel.

6. Procédé de la revendication 1, comprenant en outre la détermination d'un emplacement de bloc de mémoire locale pour chaque bloc correspondant de texture.

7. Procédé de la revendication 6 dans lequel la détermination de l'emplacement de bloc de mémoire locale pour chaque bloc correspondant de texture comporte l'opération consistant à effectuer des calculs du type :

$$\mathtt{SPUMu\ =\ int((reste(u))*}\sqrt{N})$$

$$\mathtt{SPUMv\ =\ int((reste(v))*}\sqrt{N})$$

où SPUMu et SPUMv sont des coordonnées de l'emplacement de bloc de mémoire locale et u et v sont les coordonnées de pixel.

8. Procédé de la revendication 1, comprenant en outre l'étape consistant à délivrer la valeur de pixel à un dispositif d'affichage graphique.

9. Procédé de la revendication 1, comprenant en outre, avant l'étape c), l'étape consistant à déterminer si le bloc correspondant de texture est actuellement chargé dans la mémoire locale.

10. Procédé de la revendication 1 dans lequel le nombre N des blocs peuvent être mis en cache dans la mémoire locale est égal à deux.

11. Procédé de la revendication 10 dans lequel c) et d) comportent le chargement d'un bloc de texture à un emplacement dans la mémoire locale pendant le traitement de données de bloc de texture issues d'un autre bloc de texture stocké à un autre emplacement dans la mémoire locale.

12. Appareil de traitement graphique, comprenant
une unité de traitement ayant une mémoire principale, un élément processeur principal couplé à la mémoire principale, et un élément coprocesseur (102) ayant une mémoire locale (104), la mémoire locale contenant des instructions logicielles exécutables par coprocesseur pour effectuer un plaquage de texture sur des données de pixels, les instructions logicielles exécutables par coprocesseur comportant :

a) une instruction pour que le coprocesseur reçoive un bloc de textures extraites, chaque texture extraite comportant des coordonnées de pixel pour un pixel dans une image ;

b) une instruction pour que le coprocesseur détermine un bloc correspondant d'une texture stockée dans la mémoire principale à partir des coordonnées de pixel de chaque texture extraite et d'un nombre de blocs NB qui constituent la texture, la texture ayant été divisée en un nombre NB de blocs, chaque bloc contenant tous les niveaux de carte MIP de la texture et NB étant choisi de telle sorte qu'un nombre N des blocs peuvent être mis en cache dans la mémoire locale de l'élément coprocesseur, N étant inférieur à NB ;

c) une instruction pour provoquer le chargement dans la mémoire locale d'un ou plusieurs des blocs correspondants de la texture si le ou les blocs de texture ne sont pas actuellement chargés dans la mémoire locale ;

d) une instruction pour que le coprocesseur effectue un filtrage de texture avec un ou plusieurs des blocs de texture dans la mémoire locale pour générer une valeur de pixel correspondant à une des textures extraites,

l'appareil étant **caractérisé en ce que** :

la texture fournit une ou plusieurs colonnes et/ou rangées de pixels de bordure le long d'un bord de la texture, les pixels de bordure s'enroulant jusqu'à un bord opposé de la texture.

**13.** Appareil de la revendication 12 dans lequel l'unité de traitement est un processeur Cell, l'élément processeur principal étant un élément processeur de puissance et l'élément coprocesseur étant un élément processeur synergique.

**14.** Logiciel informatique destiné à mettre en oeuvre un procédé selon l'une quelconque des revendications 1 à 11.

118

116

114

101

112

**FIG. 1**

100

CODE
108

CO-
PROCESSOR

LIST

OUTPUT

111

102

106

104

110

202 → PRE-FETCH
INSTRUCTION

200

204

IS TEXTURE
BLOCK IN
CACHE?

LOAD TEXTURE BLOCK
FROM MAIN MEMORY
INTO LOCAL STORE

No

206

208

Yes

PROCESS TEXTURE
FROM BLOCK IN LOCAL
STORE

**FIG. 2**

210

SEND PROCESSED
PIXELS TO OUTPUT
BUFFER

FIG. 3

FIG. 4

FIG. 5

600

TEXTURE
BUFFER 1

602A

TEXTURE
BUFFER 2

602B

CODE

604

INPUT
FETCH
REQUESTS

606

OUTPUT
PIXELS

608

**FIG. 6**

**EP 1 994 506 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6924814 B
- WO 9741534 A
- US 6130680 A
- US 20050024378 A